# EUROPEAN PATENT SPECIFICATION

(11) **EP 2 719 574 B1**
(45) Date of publication and mention of the grant of the patent: **28.10.2015**
(21) Application number: 12797435.0
(22) Date of filing: 04.06.2012
(51) Int. Cl.: B60N 2/07

(54) **SEAT SLIDING DEVICE**
SITZGLEITVORRICHTUNG
DISPOSITIF DE COULISSEMENT DE SIÈGE

(30) Priority: 07.06.2011 JP 2011127616
(43) Date of publication of application: 16.04.2014
(73) Proprietor: AISIN SEIKI KABUSHIKI KAISHA, Kariya-shi Aichi-ken 448-8650 (JP); TOYOTA SHATAI KABUSHIKI KAISHA, Kariya-shi Aichi-ken 448-8666 (JP)
(72) Inventor: OYA, Tsutomu, Kariya-shi Aichi-ken 448-8650 (JP); ARAKI, Toshio, Kariya-shi Aichi-ken 448-8666 (JP); YAMADA, Shinji, Kariya-shi Aichi-ken 448-8666 (JP)
(74) Representative: Winter, Brandl, Fürniss, Hübner, Röss, Kaiser, Polte - Partnerschaft mbB
(86) International application number: PCT/JP2012/064358
(87) International publication number: WO 2012/169455

(56) References cited:
- JP-A- 2000 343 988
- JP-A- 2003 146 119
- JP-U- H01 176 536
- US-A- 6 059 345

## Description

### TECHNICAL FIELD

The present invention relates to a seat sliding device, which guides a sliding movement of a seat.

### BACKGROUND ART

Conventionally, a vehicle seat is attached to a vehicle body via a seat sliding device, which adjusts a position of the seat in the vehicle front back direction. The seat sliding device allows the seat to slide along a pair of rails and adjusts the position of the seat in the vehicle front back direction by rolling a plurality of rollers provided along the rails. As for a roller configuration of the seat sliding device, the application of the arts disclosed in Patent Documents 1, 2 and 3 , for example, have been considered.

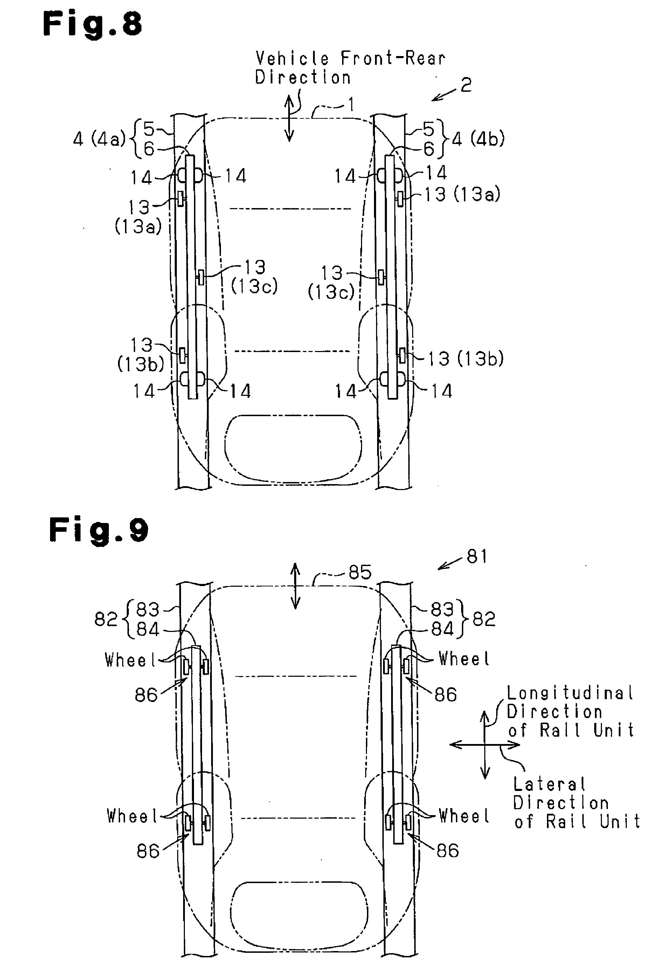

Fig. 9 shows a conventional general seat sliding device 81. The seat sliding device 81 has a pair of rail units 82, 82 on opposite sides of the seat in the lateral direction. Each of the rail units 82, 82 includes a lower rail 83 attached to an in-vehicle floor and an upper rail 84 attached to a rear surface of a seat 85.

A plurality of rollers 86 is arranged between the lower rail 83 and the upper rail 84. The rollers 86 serve as an opposite ends holding type with a pair of wheels on opposite sides thereof in the lateral direction of the seat. The rollers 86 are arranged at two positions on each rail unit 82 in the longitudinal direction (vehicle front back direction). That is, an intermediate total of four wheels on each of the rail units 82, 82, i.e., a total of eight wheels for the entire seat 85 are provided.
A further conventional slide rail device for a vehicle seat is known from prior art document 3.
Apart from comprising rollers 28a, 28b, this slide rail device further requires a separation preventive means for preventing the upper and lower rails to separarate, said preventive means being constituted by a first striker means, a notch means and a stopper means. Thus, this conventional slide rail device is rather complicated in its structure and hence expensive to manufacture and cumbersome to mount into a vehicle.

### Prior Art Documents

### Patent Documents

Patent Document 1: Japanese Laid-Open Patent Publication No. 7-197404
Patent Document 2: Japanese Laid-Open Patent Publication No. 2001-213310
Patent Document 3 : US 6059345

### SUMMARY OF THE INVENTION

### Problems that the Invention is to Solve

In the seat sliding device 81 of Fig. 9, since a total of eight wheels are needed as the rollers 86, there are problems that the number of the wheels is excessive, and sliding resistance when the seat 85 is moved becomes great. However, even if merely the number of the wheels is reduced, a problem of backlash of the seat is likely to be caused. Accordingly, there are needs for development of technologies of eliminating both of the problems, i.e., the reduction of the number of the wheels of the rollers and the restriction of the backlash of the seat.

An objective of the present invention is to provide a seat sliding device, which can reduce the number of the wheels of the rollers and restrict backlash of the seat from being caused.

### Means for Solving the Problems

In order to achieve the above described objective, a seat sliding device having the features of claim 1 or claim 8 is provided.

According to the configuration of the present invention, the first rail member supports the second rail member at three points by the three rollers. Accordingly, even if a deviation is caused between the first rail member and the second rail member in the height direction, the deviation is advantageously absorbed by the supports of the rollers at the three points. Therefore, the number of the wheels of the rollers is reduced, and backlash of the seat is unlikely to be caused.

### Effects of the Invention

According to the present invention, the number of the wheels of the rollers is reduced, and backlash of the seat is unlikely to be caused.

### BRIEF DESCRIPTION OF THE DRAWINGS

Fig. 1 is a lateral view illustrating the appearance of a seat sliding device according to a first embodiment of the present invention;
Fig. 2 is a plan view illustrating the seat sliding device shown in Fig. 1;
Fig. 3 is an exploded perspective view illustrating a rail unit;
Fig. 4 is a cross-sectional view illustrating a roller part of the rail unit;
Fig. 5 is a cross-sectional view illustrating a shoe part of the rail unit;
Fig. 6(a) is a perspective view illustrating a lateral surface of the shoe;
Fig. 6(b) is a perspective view illustrating another lateral surface of the shoe;
Figs. 7(a) and 7(b) are plan views illustrating a seat sliding device according to another embodiment;
Fig. 8 is a plan view illustrating the seat sliding device according to yet another embodiment; and
Fig. 9 is a plan view illustrating a conventional seat sliding device.

### MODES FOR CARRYING OUT THE INVENTION

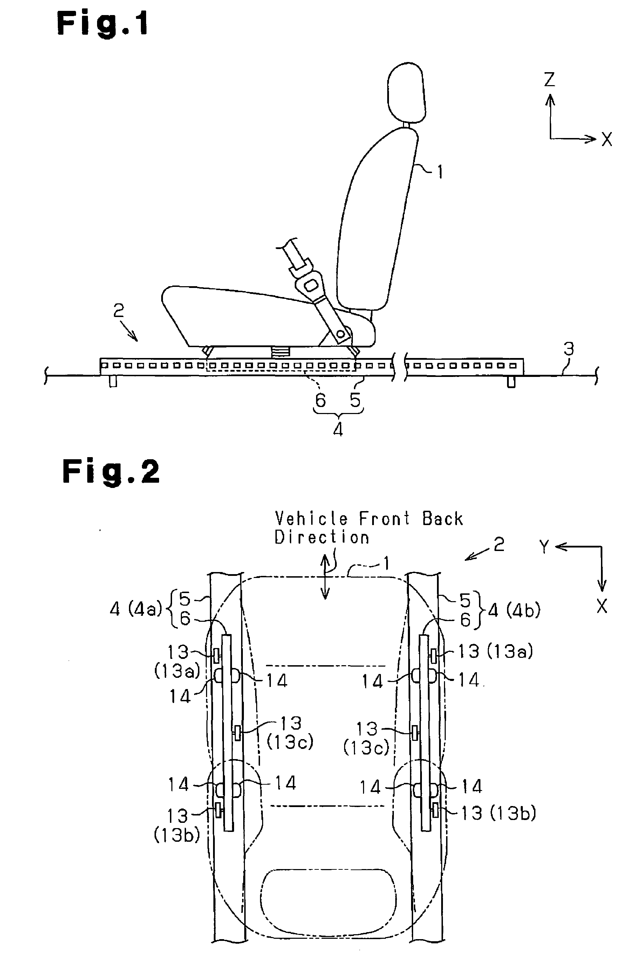

Hereinafter, a seat sliding device according to an embodiment of the present invention will be described with reference to Figs. 1 to 6.

As shown in Figs. 1 and 2, a seat 1 provided in a vehicle is attached to an in-vehicle floor 3 via a seat sliding device 2, which slides the seat 1 in the vehicle front back direction (the direction of the X axis in Fig. 1). The seat sliding device 2 enables a setup of the position of the seat 1 in the vehicle front back direction in multiple-stage. The in-vehicle floor 3 corresponds to a seat mounting surface.

As shown in Fig. 2, the seat sliding device 2 has a pair of elongated rail units 4, 4 on opposite sides of the seat 1 in the lateral direction (the direction of the Y axis in Fig. 2). Accordingly, the seat 1 is supported on the rail units 4, 4 arranged adjacent to each other in the lateral direction of the seat 1 on the in-vehicle floor 3. The rail units 4, 4 correspond to a left rail unit 4a positioned on the left side and a right rail unit positioned on the right side in Fig. 2. The left rail unit 4a and the right rail unit 4b are symmetrically arranged about a central line in the lateral direction of the seat 1.

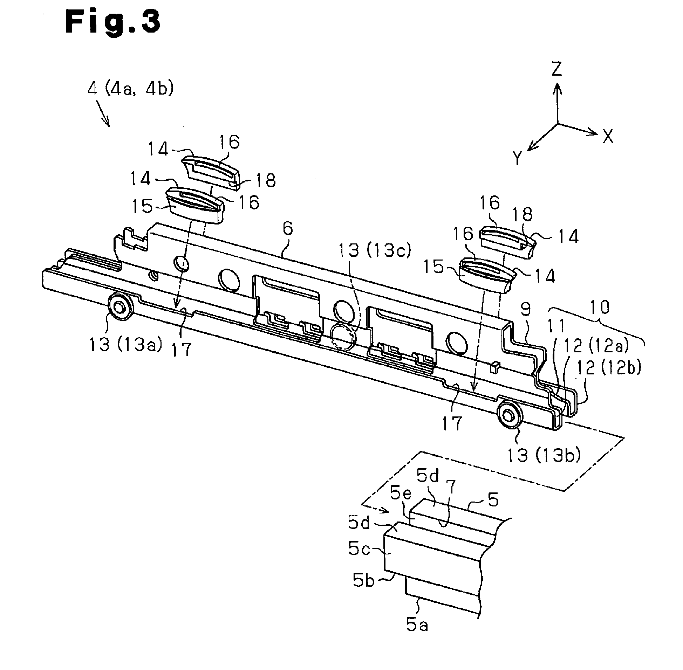

As shown in Fig. 3, a lower rail 5 attached to the in-vehicle floor 3 and an upper rail 6 attached to the rear surface of the seat 1 are provided in each of the rail units 4a and 4b such that the rails 5 and 6 slide with each other. The lower rail 5 serves as a support rail for the upper rail 6. Accordingly, the lower rail 5 is formed longer than the upper rail 6. The lower rail 5 and the upper rail 6 configure a first rail member and a second rail member, respectively.

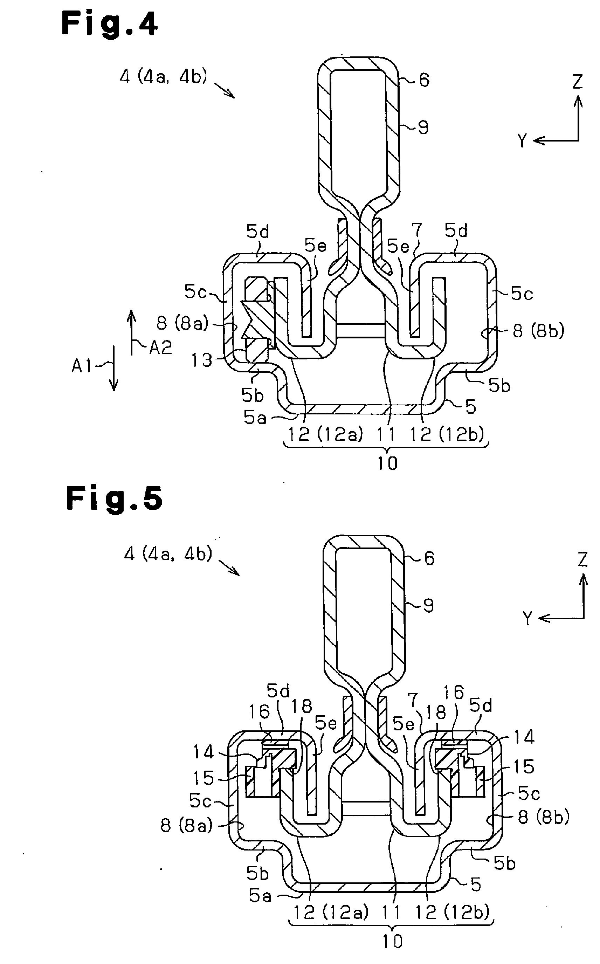

As shown in Figs. 3 to 5, a groove 7 is formed in much of the upper surface of the lower rail 5 in the longitudinal direction of the lower rail 5 (the direction of the X axis in Fig. 3). Also, as shown in Figs. 4 and 5, a pair of spatial portions 8 in communication with the groove 7 is provided in the lower rail 5. The spatial portions 8 are formed on opposite sides of the groove 7 in the lateral direction of the seat 1 (the direction of the Y axis in each of Figs. 4 and 5), respectively. The spatial portions 8, 8 correspond to a spatial portion 8a located outward in the lateral direction of the seat 1, namely, left on the drawing surface, and a spatial portion 8b located inward in the lateral direction of the seat 1, namely, right on the drawing surface. The lower rail 5 is formed by performing a folding process on a single steel plate (iron plate).

The upper rail 6 includes a hollow body portion 9, which contacts and supports the seat 1, and an extended portion 10, which is bifurcated downward from the body portion 9. The extended portion 10 includes a bifurcated portion 11 at a root thereof, formed by laminating two plate materials, and a pair of folded portions 12, 12 formed by folding distal ends of the bifurcated portion 11 upward. The folded portions 12, 12 each include a substantially L-shaped cross section and are symmetrically arranged about the central line of the upper rail 6 in the lateral direction of the seat 1 (the direction of the Y axis in each of Figs. 4 and 5). The folded portions 12, 12 correspond to a folded portion 12a located outward in the lateral direction of the seat 1, namely, left on the drawing surface, and a folded portion 12b located inward in the lateral direction of the seat 1, namely, right on the drawing surface.

As for the upper rail 6, the bifurcated portion 11 passes through the groove 7 in the lower rail 5, and the folded portions 12a and 12b are accommodated in the corresponding spatial portions 8a and 8b in the lower rail 5, respectively. The upper rail 6 slides on the lower rail 5 along the groove 7 in the vehicle front back direction. The slide position of the lower rail 5 and the upper rail 6, i.e., the position of the seat 1 in the vehicle front back direction is maintained by a lock mechanism (not shown) provided between the lower rail 5 and the upper rail 6.

As shown in Figs. 2 and 3, a plurality of rollers 13, which guides the sliding movement of the rails 5 and 6, is mounted between the lower rail 5 and the upper rail 6 at a plurality of positions. In each of the upper rails 6, 6 (only one of them is shown in Fig. 3), the rollers 13, 13... are supported by a lateral wall surface of each of the outer folded portion 12a and the inner folded portion 12b in a rotational manner.

Regarding the rollers 13, in each upper rail 6, a roller structure, in which each upper rail 6 is supported with respect to the corresponding lower rail 5 at three points, is adopted. The roller structure is of a cantilever type, in which each roller has a wheel on only one of the folded portions 12a and 12b in the locating position of each roller. Also, the roller structure has a three point support structure in which one of the rollers 13 is arranged at each end of the upper rail 6 in the longitudinal direction (a longitudinal direction of the rail: the direction of the X-axis of Fig. 3) at the outer folded portion 12a, and one of the rollers 13 is arranged at a central portion of the rail in the longitudinal direction at the inner folded portion 12b.

Accordingly, the roller structure includes a structure in which each upper rail 6 is supported with respect to the corresponding lower rail 5 at three points by rollers 13a and 13b on opposite ends of each rail unit 4 and a roller 13c on the central portion of each rail unit 4. The wheels of the cantilever type rollers 13 are alternately arranged in the longitudinal direction of the rail. The rollers 13 have three wheels in one of the rail units 4, that is, a total of six wheels in the entire seat 1. In each of the rail units 4a and 4b, two rollers 13a and 13b are arranged outward of the central line of each of the rail units 4a and 4b in the lateral direction of the seat 1, and one roller 13c is arranged inward of the central line of each of the rail units 4a and 4b in the lateral direction of the seat 1. In each of the rail units 4a and 4b, the three rollers are arranged such that they form apexes of an isosceles triangle.

As shown in Fig. 4, the rollers 13 are arranged, in the spatial portion 8 of the lower rail 5, on an upper surface of a roller rolling wall 5b located at a position one step higher than that of a bottom wall 5a of the lower rail 5. When the upper rail 6 slides with respect to the lower rail 5, the rollers 13 roll on the upper surface of the roller rolling wall 5b so that a smooth sliding movement of the upper rail 6, i.e., the position adjustment of the seat 1 is ensured by weak force.

As shown in Figs. 2 and 3, a plurality of shoes 14 (backlash reducing members), which reduces the backlash between the rails 5 and 6 is arranged at a plurality of portions between the lower rail 5 and the upper rail 6. The shoes 14 are plastic pieces for reducing the backlash. In each rail unit 4, the shoes 14, 14,... are arranged on opposite ends of each of the outer folded portion 12a and the inner folded portion 12b in the longitudinal direction of the rail, namely a total of four shoes 14 are arranged. Accordingly, four shoes 14 are arranged in each of the left rail unit 4a and the right rail unit 4b, that is, a total of eight shoes 14 are arranged in the entire seat 1. The shoes 14 correspond to backlash reducing members.

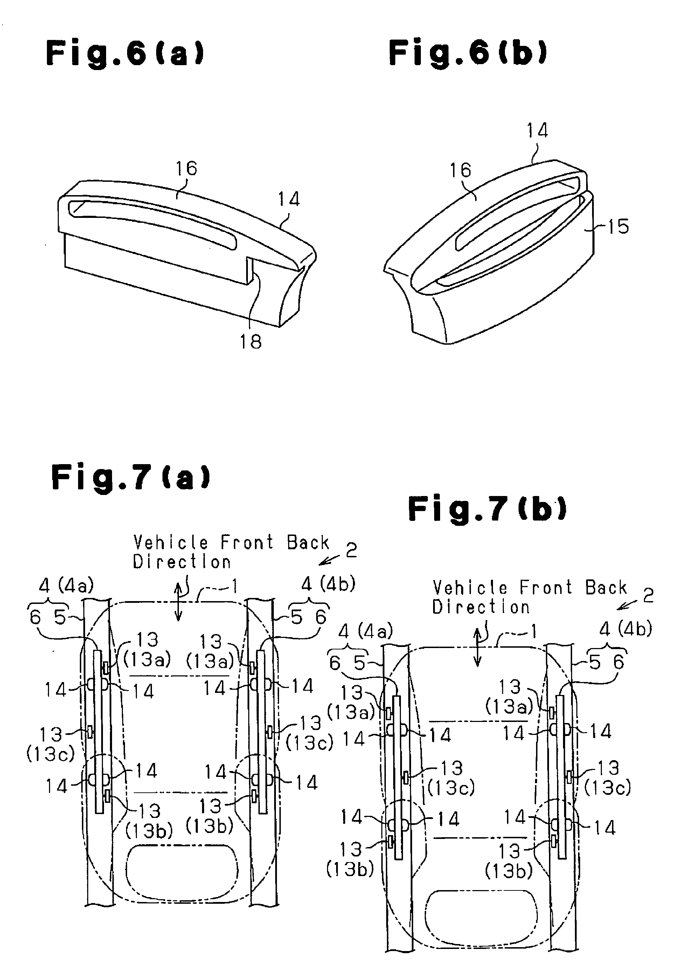

As shown in Figs. 5 and 6, each shoe 14 includes an outer sliding piece 15, which absorbs the backlash in the lateral direction of the seat 1 (the direction of the Y axis in Fig. 5), and an upper sliding piece 16, which absorbs the backlash of the rail units 4 in the vertical direction (the direction of the Z axis in Fig. 5). The outer sliding piece 15 is formed by hollowing out a much of a lateral portion of the shoe 14 and slides on an inner surface of an outer lateral wall 5c of the lower rail 5. The upper sliding piece 16 is formed by hollowing out a much of an upper portion of the shoe 14 and slides on an inner surface of an upper wall 5d of the lower rail 5. The upper sliding piece 16 and the outer sliding piece 15 are substantially arcuate in shape.

As shown in Fig. 3, the outer sliding piece 15 and the upper sliding piece 16 are attached to a stepped portion 17 (a recessed portion) formed such that it is recessed in a distal end surface of each of the folded portions 12a and 12b. The stepped portion 17 is located at a position one step lower than that of the distal end surface of each of the folded portions 12a and 12b. The outer sliding piece 15 and the upper sliding piece 16 are positioned on the upper rail 6 by holding a mounting groove 18 formed therein with respect to the stepped portion 17. Each spatial portion 8 is formed by a region surrounded by the bottom wall 5a, the roller rolling wall 5b, the outer lateral wall 5c, the upper wall 5d, and an inner lateral wall 5e. The groove 7 is directed to a region surrounded by the right and left inner lateral walls 5e, 5e.

Next, the operation of the seat sliding device 2 of the present embodiment will be described with reference to Figs. 2 and 4.

As shown in Fig. 2, when adjusting the position of the seat 1 in the vehicle front back direction (the direction of the X axis in Fig. 2), the position adjustment of the seat 1 is performed by sliding the upper rail 6 with respect to the lower rail 5. At this time, the rollers 13 between the lower rail 5 and the upper rail 6 roll so that the sliding resistance between the rails 5 and 6 is reduced, and the seat 1 is moved by weak force.

As shown in Fig. 4, depending on the case, it is conceivable that the upper rail 6 tilt in the direction of the arrow A1 in Fig. 4 with respect to the lower rail 5 due to deviation caused in mounting height of one of the rollers 13. In this case, excessive load is applied to a certain one of the wheels so that the lower rail 5 is strongly interfered with the shoes 14. Accordingly, the sliding resistance when moving the seat 1 is likely to be great. That is, in the case of the position adjustment of the seat 1, an operator feels that the seat 1 is heavy so that the position adjustment becomes difficult.

Further, depending on the case, it is conceivable that the upper rail 6 tilt in the direction of the arrow A2 in Fig. 4 with respect to the lower rail 5 due to deviation of the mounting heights of the rollers 13. In this case, a certain one of the rollers 13 is likely to separate from the rail surface and idle. Accordingly, although the sliding resistance when moving the seat 1 becomes small, one of the rollers 13 is in the separated state so that a gap generated between the roller 13 and the rail surface becomes a factor causing the backlash of the seat 1.

Therefore, in the seat sliding device 2 of the present embodiment, the number of the wheels of the rollers 13 arranged on each of the rail units 4a and 4b is set as three (13a, 13b, and 13c). The seat sliding device 2 includes a structure in which each upper rail 6 is supported with respect to the corresponding lower rail 5 by the three wheels at three points. Therefore, according to the three point support structure, the upper rail 6 is supported with respect to the lower rail 5 in a single plane.

Accordingly, even if the deviation of the upper rail 6 in the direction of the arrow A1 in Fig. 4 with respect to the lower rail 5 is likely to be generated, all of the loads at this time are distributed to all of the rollers 13 so that the excessive load is not applied to the certain roller 13. For this reason, even in a situation where the height deviation is caused in the direction of the arrow A1 in Fig. 4, the sliding resistance between the lower rail 5 and the upper rail 6 is restricted to be low.

Even if the deviation of the upper rail 6 in the direction of the arrow A2 in Fig. 4 with respect to the lower rail 5 is likely to be caused, all of the rollers 13 are maintained to contact the lower rail 5 since the rollers 13 include the three point support structure. Accordingly, even in a situation where the height deviation is caused in the direction of the arrow A2 in Fig. 4, the rollers 13 are not brought into a separated state so that the backlash of the seat 1 is unlikely to be caused.

Further, in the seat sliding device 2, it is only necessary to provide the three rollers 13 in each of the rail units 4a and 4b. That is, in the entire seat 1, only six of the rollers 13 may be provided. Accordingly, the number of the wheels to be mounted on the seat sliding device 2 is reduced and is small, and the backlash of the seat 1 is reduced as well.

Since the present embodiment includes the three point support structure in which each of the rail units 4a and 4b is supported by the three rollers 13, the backlash between the lower rail 5 and the upper rail 6 is reduced at a unit of each of the rail units 4a and 4b. Therefore, advantages for securing stable sliding movement of the seat 1 are improved. The backlash between the right and left rail units 4a and 4b shall be absorbed by a frame of the seat 1.

The present embodiment has the following advantages.
(1) The upper rail 6 is supported by the three cantilever type rollers 13a, 13b, and 13c at the three points with respect to the lower rail 5. Accordingly, even if the deviation is caused between the rails 5 and 6 in the height direction, the deviation is absorbed by the supports of the rollers 13 at the three points. Therefore, the number of the wheels of the rollers 13 is reduced to be small, and the backlash of the seat 1 is reduced to be small as well.
(2) The shoes 14, which absorb the backlash between the lower rail 5 and the upper rail 6, are provided between the rails 5 and 6. Accordingly, the backlash between the rails 5 and 6 is absorbed not only by the three point support structure according to the rollers 13 but also by the shoes 14 so that the advantages of reducing the backlash of the seat 1 are improved.
(3) Since an occupant is seated on the seat 1, the lower rail 5 may be deformed to be warped due to a load thereof. The deformation of warping is directed to a deformation in which a central portion of the lower rail 5 is lowered, and opposite ends of the lower rail 5 are raised. However, since the shoes 14 are arranged between the two rollers 13, the shoes 14 serve to fill a gap caused due to the deformation of the rail so that the advantages of reducing the backlash of the seat 1 are improved.
(4) Since the three rollers 13 are arranged, the backlash between each roller 13 and the lower rail 5 is reduced. Accordingly, the deviation between the lower rail 5 and the upper rail 6 in the rail height direction due to the backlash is reduced so that the size variation of the mountable shoes 14 is reduced as well. Therefore, it is not necessary to set the size of the shoe 14 in accordance with the backlash between each roller 13 and the lower rail 5, and the sliding load of the rail is stabilized.

The present embodiment is not limited to the configuration described above, but may be modified as shown below.

As shown in Fig. 7 (a), the rollers 13a and 13b to be located on the opposite ends of the upper rail 6 may be arranged at the inner folded portion 12b, and the central roller 13c may be arranged at the outer folded portion 12a. In each of the rail units 4a and 4b, the two rollers 13 located on the opposite ends of the upper rail 6 are arranged inward of the central line of each of the rail units 4a and 4b in the lateral direction of the seat 1, and the central roller 13 is arranged outward of the central line of each of the rail units 4a and 4b in the lateral direction of the seat 1.

As shown in Fig. 7 (b), the rollers 13 may be arranged in the same direction in the right and left rail units 4a and 4b. In each of the rail units 4a and 4b, the two rollers 13a and 13b to be located on the opposite ends of the upper rail 6 may be arranged outward of the central line of each of the rail units 4a and 4b in the lateral direction of the seat 1, and the central roller 13c may be arranged inward of the central line of each of the rail units 4a and 4b in the lateral direction of the seat 1.

The shoes 14 are not limited to be arranged between the roller 13a (13b) located on each end of the upper rail 6 and the central roller 13c. As shown in Fig. 8, the shoes 14 may be arranged outward of the rollers 13a and 13b located on the opposite ends of the upper rail 6. That is, the front shoe 14 may be arranged more forward than the roller 13a positioned most forward of the vehicle in the longitudinal direction in each of the rail units 4a and 4b, and the rear shoe 14 may be arranged more rearward than the roller 13b positioned most rearward of the vehicle in the longitudinal direction in each of the rail units 4a and 4b.

The lower rail 5 may be attached to the seat 1, and the upper rail 6 may be attached to the in-vehicle floor 3. The number of the rail units 4 need not be restricted to two, but may be three or more, for example.

The seat mounting surface is not limited to the in-vehicle floor 3, but may be changed to other locations.

The number of the shoes 14 to be mounted is not limited to a total of eight, but may be changed as necessary. Also, the mounting positions of the shoes 14 may be changed according to a use situation as necessary.

The backlash reducing member is not limited to the shoe 14, but other parts may be used for it as necessary.

The locating positions of the rollers 13 are not limited to the above described examples in the embodiment or other embodiments, but may be changed to other locating positions as long as the rollers 13 include the three point support structure in which the rail is supported in a single plane.

The seat sliding device 2 is not limited to be applied to a vehicle, but may be applied to other apparatuses and devices.

## Claims

1. A seat sliding device comprising
a plurality of rail units (4) provided between a seat (1) and a seat mounting surface, wherein each rail unit (4) includes a first rail member (5) attached to the seat mounting surface, and a second rail member (6) attached to the seat (1), and the second rail member (6) slides with respect to the first rail member (5) to adjust a position of the seat (1); and
a plurality of rollers (13) arranged between the first rail member (5) and the second rail member (6), wherein
only three rollers (13) are provided for each rail unit (4) so that the first rail member (5) supports the second rail member (6) by the three rollers (13a-13c) at three points,
the three rollers (13) include two rollers (13a, 13b) respectively located on opposite ends of each rail unit (4), and a single roller (13c) positioned between the two rollers (13a, 13b), and
the two rollers (13a, 13b) are arranged outward of a central line of each rail unit (4) in a lateral direction of the seat (1), and the single roller (13c) is arranged inward of the central line of each rail unit (4) in the lateral direction, or
the two rollers (13a, 13b) are arranged inward of the central line of each rail unit (4) in the lateral direction of the seat (1), and the single roller (13c) is arranged outward of the central line of each rail unit (4) in the lateral direction.

2. The seat sliding device according to claim 1, wherein
the rail units (4) include a right rail unit (4b) and a left rail unit (4a) arranged adjacent to each other in a lateral direction of the seat (1),
in each of the right and left rail units (4b, 4a), the three rollers (13a-13c) are alternately arranged with respect to a central line of the rail unit (4a, 4b) in a lateral direction, and
the three rollers (13a-13c) of the right rail unit (4b) and the three rollers (13a-13c) of the right rail unit (4b) are arranged to be directed in the same direction with respect to a central line of each rail unit (4a, 4b) in a lateral direction.

3. The seat sliding device according to claim 1 or 2, further comprising a backlash reducing member (14) arranged between the first rail member (5) and the second rail member (6), wherein the backlash reducing member (14) reduces backlash between the first rail member (5) and the second rail member (6).

4. The seat sliding device according to claim 3, wherein the backlash reducing member (14) is arranged between two of the rollers (13) adjacent to each other in a longitudinal direction of each rail unit (4).

5. The seat sliding device according to claim 3, wherein
the first rail member (5) includes a lateral wall (5c) and an upper wall (5d),
the backlash reducing member (14) is attached to the second rail member (6), and includes
an outer sliding strip (15), which is slidable on the lateral wall (5c) of the first rail member (5) to absorb backlash of the second rail member (6) in a lateral direction of the seat (1), and
an upper sliding piece (16), which is slidable on the upper wall (5d) of the first rail member (5) to absorb the backlash of the second rail member (6) in a vertical direction of each rail unit (4).

6. The seat sliding device according to claim 1, further comprising a plurality of backlash reducing members (14), which are located between the first rail member (5) and the second rail member (6), and reduce backlash between the first rail member (5) and the second rail member (6), wherein in each rail unit (4), the backlash reducing members (14) include a front backlash reducing member (14) positioned more forward than the roller (13a) positioned most forward of a vehicle, and a rear backlash reducing member (14) positioned more rearward than the roller (13b) positioned most rearward of the vehicle.

7. The seat sliding device according to claim 6, wherein
the first rail member (5) includes a lateral wall (5c) and an upper wall (5d),
each backlash reducing member (14) is attached to the second rail member (6), and includes
an outer sliding strip (15), which is slidable on the lateral wall (5c) of the first rail member (5) to absorb backlash of the second rail member (6) in a lateral direction of the seat (1), and
an upper sliding piece (16), which is slideable on the upper wall (5d) of the first rail member (5) to absorb the backlash of the second rail member (6) in a vertical direction of each rail unit (4).

8. A seat sliding device comprising
a plurality of rail units (4) provided between a seat (1) and a seat mounting surface, wherein each rail unit (4) includes a first rail member (5) attached to the seat (1) mounting surface, and a second rail member (6) attached to the seat (1), and the second rail member (6) slides with respect to the first rail member (5) to adjust a position of the seat (1); and
a plurality of rollers (13) arranged between the first rail member (5) and the second rail member (6), wherein
only three rollers (13a-13c) are provided for each rail unit (4) so that the first rail member (5) supports the second rail member (6) by the three rollers (13a-13c) at three points,
the second rail member (6) includes
a body portion (9), which supports the seat (1),
a bifurcated portion (11), which extends downward from the body portion (9), and
a pair of folded portions(12a, 12b), which extend upward from the bifurcated portion (11), wherein
two of the three rollers (13) are arranged on a lateral wall of one of the folded portions (12a, 12b), and
one of the three rollers (13) is arranged on a lateral wall of the other one of the folded portions (12a, 12b).

9. The seat sliding device according to claim 8, wherein
a plurality of recessed portions (17) are formed in a distal end of each folded portion (12a, 12b), and
the seat sliding device further includes a backlash reducing member (14), which is attached to each recessed portion (17) and reduces backlash between the first and the second rail members (5, 6).

## Patentansprüche

1. Sitzgleitvorrichtung, mit:
einer Mehrzahl von Schieneneinheiten (4), welche zwischen einem Sitz (1) und einer Sitzmontageoberfläche vorgesehen sind, wobei eine jede Schieneneinheit (4) ein erstes Schienenbauteil (5), welches an der Sitzmontageoberfläche angebracht ist, und ein zweites Schienenbauteil (6) aufweist, welches an dem Sitz (1) angebracht ist, und das zweite Schienenbauteil (6) mit Bezug auf das erste Schienenbauteil (5) gleitet, um eine Position des Sitzes (1) einzustellen; und
einer Mehrzahl von Rollen (13), welche zwischen dem ersten Schienenbauteil (5) und dem zweiten Schienenbauteil (6) angeordnet sind, wobei
nur drei Rollen (13) für eine jede Schieneneinheit (4) vorgesehen sind, so dass das erste Schienenbauteil (5) das zweite Schienenbauteil (6) durch die drei Rollen (13a - 13c) in drei Punkten lagert,
die drei Rollen (13) zwei Rollen (13a, 13b), welche jeweils auf entgegengesetzten Enden einer jeden Schieneneinheit (4) angeordnet sind, und eine einzelne Rolle (13c) beinhalten, welche zwischen den zwei Rollen (13a, 13b) angeordnet ist, und
die zwei Rollen (13a, 13b) außenseitig von einer zentralen Linie einer jeden Schieneneinheit (4) in einer Lateralrichtung des Sitzes (1) angeordnet sind und die einzelne Rolle (13c) innenseitig von der zentralen Linie einer jeden Schieneneinheit (4) in der Lateralrichtung angeordnet ist, oder
die zwei Rollen (13a, 13b) innenseitig von der zentralen Linie einer jeden Schieneneinheit (4) in der Lateralrichtung des Sitzes (1) angeordnet sind, und die einzelne Rolle (13c) außenseitig von der zentralen Linie von einer jeden Schieneneinheit (4) in der Lateralrichtung angeordnet ist.

2. Sitzgleitvorrichtung gemäß Anspruch 1, wobei
die Schieneneinheiten (4) eine rechte Schieneneinheit (4b) und eine linke Schieneneinheit (4a) beinhalten, welche nebeneinander in einer Lateralrichtung des Sitzes (1) angeordnet sind,
bei einer jeden der rechten und linken Schieneneinheiten (4a, 4b) die drei Rollen (13a - 13c) abwechselnd mit Bezug auf eine zentrale Linie der Schieneneinheiten (4a, 4b) in einer Lateralrichtung angeordnet sind, und
die drei Rollen (13a - 13c) der rechten Schieneneinheit (4b) und die drei Rollen (13a - 13c) der rechten Schieneneinheit (4b) so angeordnet sind, dass sie in dieselbe Richtung gewandt sind mit Bezug auf eine zentrale Linie einer jeden Schieneneinheit (4a, 4b) in einer Lateralrichtung.

3. Sitzgleitvorrichtung gemäß Anspruch 1 oder 2, mit weiterhin einem Spielverringerungsbauteil (14), welches zwischen dem ersten Schienenbauteil (5) und dem zweiten Schienenbauteil (6) angeordnet ist, wobei das Spielverringerungsbauteil (14) ein Spiel zwischen dem ersten Schienenbauteil (5) und dem zweiten Schienenbauteil (6) verringert.

4. Sitzgleitvorrichtung gemäß Anspruch 3, wobei das Spielverringerungsbauteil (14) zwischen zwei der Rollen (13) angeordnet ist, welche nebeneinander liegen in einer Longitudinalrichtung einer jeden Schieneneinheit (4).

5. Sitzgleitvorrichtung gemäß Anspruch 3, wobei
das erste Schienenbauteil (5) eine seitliche Wand (5c) und eine obere Wand (5d) aufweist,
das Spielverringerungsbauteil (14) an dem zweiten Schienenbauteil (6) angebracht ist, und aufweist
einen äußeren Gleitstreifen(15), welcher auf der seitlichen Wand (5c) des ersten Schienenbauteils (5) gleitbar ist, um ein Spiel des zweiten Schienenbauteils (6) in einer Lateralrichtung des Sitzes (1) zu absorbieren, und
ein oberes Gleitstück (16), welches auf der oberen Wand (5d) des ersten Schienenbauteils (5) gleitbar ist, um das Spiel des zweiten Schienenbauteils (6) in einer Vertikalrichtung einer jeden Schieneneinheit (4) zu absorbieren.

6. Sitzgleitvorrichtung gemäß Anspruch 1 mit weiterhin einer Mehrzahl von Spielverringerungsbauteilen (14), welche zwischen dem ersten Schienenbauteil (5) und dem zweiten Schienenbauteil (6) angeordnet sind und ein Spiel zwischen dem ersten Schienenbauteil (5) und dem zweiten Schienenbauteil (6) verringern, wobei bei jeder Schieneneinheit (4) die Spielverringerungsbauteile (14) ein vorderes Spielverringerungsbauteil (14), welches vorwärtiger angeordnet ist als die Rolle (13a), welche am meisten vorwärtig in einem Fahrzeug angeordnet ist, und ein hinteres Spielverringerungsbauteil (14) aufweisen, welches rückwärtiger angeordnet ist als die Rolle (13b), welche am meisten rückwärtig in dem Fahrzeug angeordnet ist.

7. Sitzgleitvorrichtung gemäß Anspruch 6, wobei
das erste Schienenbauteil (5) eine seitliche Wand (5c) und eine obere Wand (5d) aufweist,
jedes Spielverringerungsbauteil (14) an dem zweiten Schienenbauteil (6) angebracht ist, und aufweist
einen äußeren Gleitstreifen (15), welcher auf der seitlichen Wand (5c) des ersten Schienenbauteils (5) gleitbar ist, um ein Spiel des zweiten Schienenbauteils (6) in einer Lateralrichtung des Sitzes (1) zu absorbieren, und
ein oberes Gleitstück (16), welches auf der oberen Wand (5d) des ersten Schienenbauteils (5) gleitbar ist, um das Spiel des zweiten Schienenbauteils (6) in einer Vertikalrichtung einer jeden Schieneneinheit zu absorbieren.

8. Sitzgleitvorrichtung, mit
einer Mehrzahl von Schieneneinheiten (4), welche zwischen einem Sitz (1) und einer Sitzmontageoberfläche angeordnet sind, wobei eine jede Schieneneinheit (4) ein erstes Schienenbauteil (5), welches an der Sitzmontageoberfläche angebracht ist, und ein zweites Schienenbauteil (6) aufweist, welches an dem Sitz (1) angebracht ist, und das zweite Schienenbauteil (6) mit Bezug auf das erste Schienenbauteil (5) gleitet, um eine Position des Sitzes (1) einzustellen, und
einer Mehrzahl von Rollen (13), welche zwischen dem ersten Schienenbauteil (5) und dem zweiten Schienenbauteil (6) angeordnet sind, wobei
nur drei Rollen (13a bis 13c) für eine jede Schieneneinheit (4) vorgesehen sind, so dass das erste Schienenbauteil (5) das zweite Schienenbauteil (6) durch die drei Rollen (13a bis 13c) in drei Punkten lagert,
das zweite Schienenbauteil (6) aufweist
einen Körperabschnitt (9), welcher den Sitz (1) trägt,
einen gegabelten Abschnitt (11), welcher sich nach unten von dem Körperabschnitt (9) erstreckt, und
ein Paar von gefalteten Abschnitten (12a, 12b), welche sich von dem gegabelten Abschnitt (11) nach oben erstrecken, wobei
zwei der drei Rollen (13) auf einer seitlichen Wand von einem der gefalteten Abschnitte (12a, 12b) angeordnet sind, und
eine der drei Rollen (13) auf einer seitlichen Wand des anderen der gefalteten Abschnitte (12a, 12b) angeordnet ist.

9. Sitzgleitvorrichtung gemäß Anspruch 8, wobei
eine Mehrzahl von Einbuchtungsabschnitten (17) an einem distalen Ende von einem jeden gefalteten Abschnitt (12a, 12b) ausgeformt sind, und
die Sitzgleitvorrichtung weiterhin ein Spielverringerungsbauteil (14) aufweist, welches an einem jeden Einbuchtungsabschnitt (17) angebracht ist und ein Spiel zwischen den ersten und dem zweiten Schienenbauteilen (5, 6) verringert.

## Revendications

1. Dispositif de coulissement de siège comprenant une pluralité d'unités de rail (4) prévues entre un siège (1) et une surface de montage de siège, dans lequel chaque unité de rail (4) comprend un premier élément de rail (5) fixé sur la surface de montage de siège, et un second élément de rail (6) fixé sur le siège (1) et le second élément de rail (6) coulisse par rapport au premier élément de rail (5) afin d'ajuster une position du siège (1) ; et
une pluralité de rouleaux (13) agencés entre le premier élément de rail (5) et le second élément de rail (6), dans lequel
seuls trois rouleaux (13) sont prévus pour chaque unité de rail (4) de sorte que le premier élément de rail (5) supporte le second élément de rail (6) par les trois rouleaux (13a-13c) au niveau de trois points,
les trois rouleaux (13) comprennent deux rouleaux (13a, 13b) respectivement positionnés sur les extrémités opposées de chaque unité de rail (4), et un seul rouleau (13c) positionné entre les deux rouleaux (13a, 13b), et
les deux rouleaux (13a, 13b) sont agencés vers l'extérieur d'une ligne centrale de chaque unité de rail (4) dans une direction latérale du siège (1), et le rouleau unique (13c) est agencé vers l'intérieur de la ligne centrale de chaque unité de rail (4) dans la direction latérale, ou bien
les deux rouleaux (13a, 13b) sont agencés vers l'intérieur de la ligne centrale de chaque unité de rail (4) dans la direction latérale du siège (1), et le rouleau unique (13c) est agencé vers l'extérieur de la ligne centrale de chaque unité de rail (4) dans la direction latérale.

2. Dispositif de coulissement de siège selon la revendication 1, dans lequel
les unités de rail (4) comprennent une unité de rail droite (4b) et une unité de rail gauche (4a) agencées de manière adjacente entre elles dans une direction latérale du siège (1),
dans chacune des unités de rail droite et gauche (4b, 4a), les trois rouleaux (13a-13c) sont agencés de manière alternée par rapport à une ligne centrale de l'unité de rail (4a, 4b) dans une direction latérale, et
les trois rouleaux (13a-13c) de l'unité de rail droite (4b) et les trois rouleaux (13a-13c) de l'unité de rail droite (4b) sont agencés pour être dirigés dans la même direction par rapport à une ligne centrale de chaque unité de rail (4a, 4b) dans une direction latérale.

3. Dispositif de coulissement de siège selon la revendication 1 ou 2, comprenant en outre un élément de réduction de jeu (14) agencé entre le premier élément de rail (5) et le second élément de rail (6), dans lequel l'élément de réduction de jeu (14) réduit le jeu entre le premier élément de rail (5) et le second élément de rail (6).

4. Dispositif de coulissement de siège selon la revendication 3, dans lequel l'élément de réduction de jeu (14) est agencé entre deux des rouleaux (13) adjacents entre eux dans une direction longitudinale de chaque unité de rail (4).

5. Dispositif de coulissement de siège selon la revendication 3, dans lequel
le premier élément de rail (5) comprend une paroi latérale (5c) et une paroi supérieure (5d),
l'élément de réduction de jeu (14) est fixé sur le second élément de rail (6), et comprend
une bande de coulissement externe (15) qui peut coulisser sur la paroi latérale (5c) du premier élément de rail (5) pour absorber le jeu du second élément de rail (6) dans une direction latérale du siège (1), et
une pièce de coulissement supérieure (16) qui peut coulisser sur la paroi supérieure (5d) du premier élément de rail (5) pour absorber le jeu du second élément de rail (6) dans une direction verticale de chaque unité de rail (4).

6. Dispositif de coulissement de siège selon la revendication 1, comprenant en outre une pluralité d'éléments de réduction de jeu (14) qui sont positionnés entre le premier élément de rail (5) et le second élément de rail (6) et réduisent le jeu entre le premier élément de rail (5) et le second élément de rail (6), dans lequel dans chaque unité de rail (4), les éléments de réduction de jeu (14) comprennent un élément de réduction de jeu avant (14) positionné plus vers l'avant que le rouleau (13a) positionné le plus en avant d'un véhicule, et un élément de réduction de jeu arrière (14) positionné plus vers l'arrière que le rouleau (13b) positionné le plus vers l'arrière du véhicule.

7. Dispositif de coulissement de siège selon la revendication 6, dans lequel
le premier élément de rail (5) comprend une paroi latérale (5c) et une paroi supérieure (5d),
chaque élément de réduction de jeu (14) est fixé au second élément de rail (6) et comprend
une bande de coulissement externe (15) qui peut coulisser sur la paroi latérale (5c) du premier élément de rail (5) afin d'absorber le jeu du second élément de rail (6) dans une direction latérale du siège (1), et
une pièce de coulissement supérieure (16) qui peut coulisser sur la paroi supérieure (5d) du premier élément de rail (5) pour absorber le jeu du second élément de rail (6) dans une direction verticale de chaque unité de rail (4).

8. Dispositif de coulissement de siège comprenant une pluralité d'unités de rail (4) prévues entre un siège (1) et une surface de montage de siège, dans lequel chaque unité de rail (4) comprend un premier élément de rail (5) fixé sur la surface de montage de siège (1), et un second élément de rail (6) fixé au siège (1), et le second élément de rail (6) coulisse par rapport au premier élément de rail (5) afin d'ajuster une position du siège (1) ; et
une pluralité de rouleaux (13) agencés entre le premier élément de rail (5) et le second élément de rail (6), dans lequel
seuls trois rouleaux (13a-13c) sont prévus pour chaque unité de rail (4) de sorte que le premier élément de rail (5) supporte le second élément de rail (6) par les trois rouleaux (13a-13c) au niveau de trois points,
le second élément de rail (6) comprend
une partie de corps (9) qui supporte le siège (1),
une partie bifurquée (11) qui s'étend vers le bas à partir de la partie de corps (9), et
une paire de parties pliées (12a, 12b) qui s'étendent vers le haut à partir de la partie bifurquée (11), dans lequel
deux des trois rouleaux (13) sont agencés sur une paroi latérale de l'une des parties pliées (12a, 12b), et
l'un des trois rouleaux (13) est agencé sur une paroi latérale de l'autre partie des parties pliées (12a, 12b).

9. Dispositif de coulissement de siège selon la revendication 8, dans lequel
une pluralité de parties évidées (17) sont formées dans une extrémité distale de chaque partie pliée (12a, 12b), et
le dispositif de coulissement de siège comprend en outre un élément de réduction de jeu (14) qui est fixé sur chaque partie évidée (17) et réduit le jeu entre le premier et le second élément de rail (5, 6).
